(19) Europäisches Patentamt / European Patent Office / Office européen des brevets

(11) **EP 2 461 140 B1**

(12) **FASCICULE DE BREVET EUROPEEN**

(45) Date de publication et mention
de la délivrance du brevet:
**06.11.2013 Bulletin 2013/45**

(51) Int Cl.:
*G01F 15/06* (2006.01)     *G01F 15/075* (2006.01)
*G01D 4/02* (2006.01)      *G01K 17/06* (2006.01)

(21) Numéro de dépôt: **10306350.9**

(22) Date de dépôt: **03.12.2010**

(54) **Compteur d'énergie adapté au comptage d'impulsions d'un équipement externe**

Energiezähler zum Zählen von Impulsen einer externen Einrichtung

Energy meter suitable for counting pulses of an external device

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**06.06.2012 Bulletin 2012/23**

(73) Titulaire: **Itron France**
**92100 Boulogne-Billancourt (FR)**

(72) Inventeur: **Staub, Frédéric**
**71700 Tournus (FR)**

(74) Mandataire: **Howson, Richard G.B. et al**
**Kilburn & Strode LLP**
**20 Red Lion Street**
**London WC1R 4PJ (GB)**

(56) Documents cités:
**WO-A1-2006/131152     JP-A- 3 239 919
US-A- 4 848 164**

**Description**

La présente invention concerne le domaine des compteurs d'énergie, notamment des compteurs d'énergie thermique, et plus particulièrement le traitement des entrées de comptage d'impulsions venant d'autres compteurs.

Dans le domaine des compteurs thermiques du type compteurs d'eau, ces derniers peuvent avoir en charge de compter des impulsions délivrées par d'autres équipements ou compteurs auxquels ils sont susceptibles d'être reliés. Pour ce faire, ils sont équipés d'une ou plusieurs entrées d'impulsions dites entrées « WM » (initiales anglo-saxonnes mises pour Water Meter) destinées à recevoir ces impulsions externes.

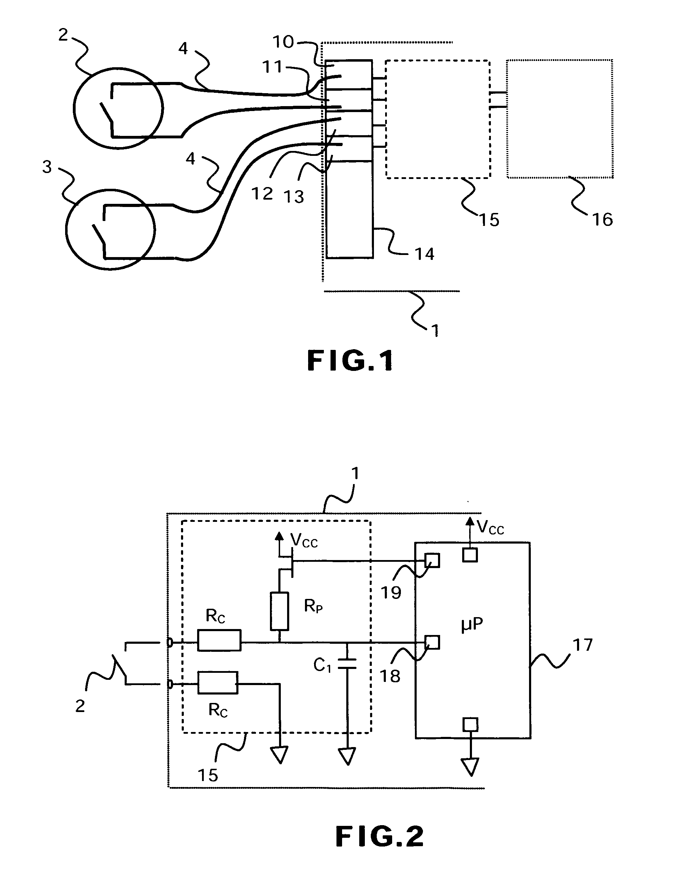

La figure 1 illustre schématiquement et fonctionnellement une configuration dans laquelle un compteur 1 d'énergie thermique est relié aux sorties impulsions respectives de deux équipements externes, schématisées par deux interrupteurs ou contacteurs 2, 3 à lame souple de type ampoule Reed. Ces deux interrupteurs ou contacteurs 2, 3 se comportent comme des relais dont les deux bornes sont connectées sur deux entrées, respectivement 10, 11 et 12, 13 du bornier 14 du compteur 1, par l'intermédiaire de câbles électriques 4. Les impulsions correspondant aux changements d'états ouvert/fermé des contacteurs 2, 3 sont délivrées en entrée d'un module 15 d'interface électronique dont la sortie est reliée à l'entrée d'un module de calcul 16.

On s'intéresse dans la suite au module 15 d'interface, qui doit être capable de délivrer à une porte logique ou un port d'entrée d'un microprocesseur, en fonction de l'état ouvert ou fermé des contacteurs 2, 3, des niveaux de tensions adaptés pour déduire les informations binaires correspondantes. Plus précisément, le module 15 d'interface doit être capable de fournir, lorsque le contacteur externe est à l'état fermé, un niveau de tension inférieur au seuil bas du microprocesseur du compteur, pour que ce dernier interprète ce niveau comme une entrée égale au zéro logique. De même, le module 15 d'interface doit être capable de fournir, lorsque le contacteur externe est à l'état ouvert, un niveau de tension supérieur au seuil haut du microprocesseur du compteur, pour que ce dernier interprète ce niveau comme une entrée égale au un logique.

L'une des problématiques rencontrées lors de la conception du compteur, et en particulier du module 15 d'interface, est que l'on ne connaît pas a priori le type d'équipement externe qui sera effectivement relié au compteur, ni les conditions de cette liaison (types de câbles, longueur de ces câbles...). Il est donc impossible de connaître exactement la nature (résistive et/ou capacitive) de l'impédance de charge qui sera ramenée par l'équipement externe en entrée du module 15 d'interface. Cela conduit à devoir spécifier des impédances minimum et maximum selon le type de charges possible et pour les deux états (ouvert/fermé) possibles. On considère typiquement que l'impédance de charge ramenée par l'équipement externe présente une capacité C maximum de l'ordre de 20 nF, une résistance minimum $R_{min}$ de l'ordre de 1 MΩ lorsque le contacteur est ouvert, et une résistance maximum $R_{max}$ de l'ordre de 500 Ω lorsque le contacteur est fermé.

En outre, la fréquence des impulsions à compter est généralement faible (typiquement de l'ordre de 0,2 Hz), mais des rebonds sont possibles du fait de la nature même des contacteurs. D'autre part, la longueur des câbles les rend sensibles aux perturbations électromagnétiques. Il est donc nécessaire de filtrer fortement les entrées « WM » au niveau du module 15 d'interface.

Enfin, dans le cas d'un compteur d'énergie thermique, dont le fonctionnement électrique est classiquement assuré par une pile, il est nécessaire de développer des solutions économes en termes d'énergie pour garantir une autonomie de plusieurs années sans avoir à changer la pile.

Une solution connue pour réaliser le module 15 d'interface consiste à utiliser, comme représenté schématiquement sur la figure 2, un filtrage avec un pont résistif composé de deux résistances de filtrage $R_C$ et d'un condensateur de filtrage $C_1$, associé à une résistance de tirage $R_P$ (ou résistance « pull-up »). Sur la figure 2, le contacteur 2 de l'équipement externe est connecté sur deux entrées du module 15 d'interface, une sortie de ce dernier étant connectée sur une entrée logique ou port d'entrée 18 d'un microprocesseur 17 du compteur 1. Plus précisément, le contacteur ou relais 2 est connecté en série entre d'une part, une tension d'alimentation $V_{CC}$ du compteur au travers de l'une des deux résistances de filtrage $R_C$ et de la résistance de tirage $R_P$ du module 15, et d'autre part, la masse, au travers de l'autre des deux résistances de filtrage $R_C$. Le point commun entre l'une des deux résistances $R_C$, la résistance de tirage $R_P$ et le condensateur de filtrage $C_1$ est connecté électriquement sur le port d'entrée 18 du microprocesseur 17. Dans ce type connu de configuration, la résistance de tirage $R_P$ tire le niveau du signal vu sur le port d'entrée 18 au un logique, alors qu'une impulsion externe, provoquant la fermeture du contacteur 2, ramène ce niveau à la masse, et par suite au zéro logique.

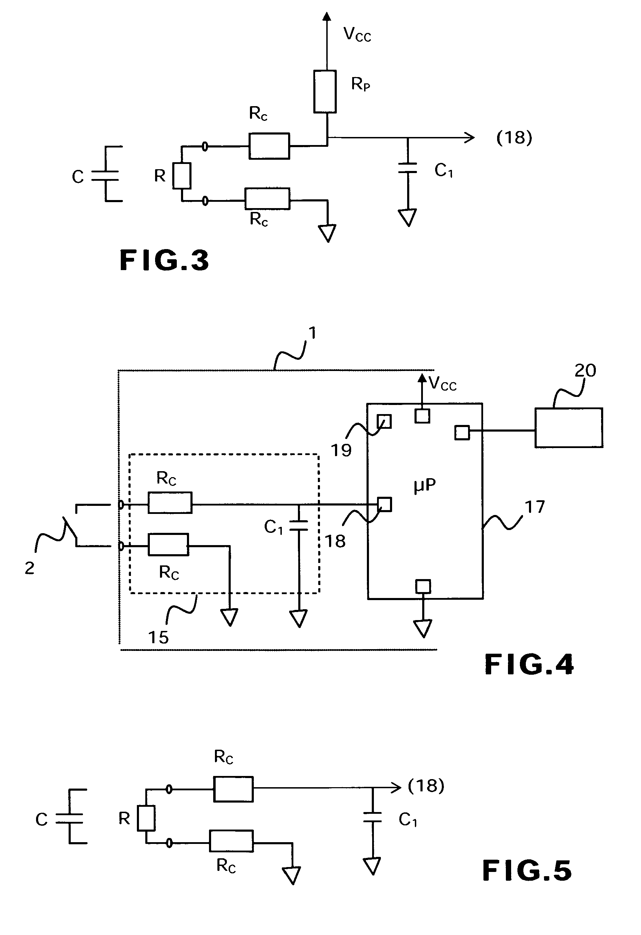

Par souci d'économie d'énergie, le module 15 fonctionne de préférence en mode découpé, en mettant en route l'alimentation $V_{CC}$ de manière ponctuelle, notamment par l'intermédiaire d'une commande délivrée sur un port de sortie 19 du microprocesseur. Le schéma électrique équivalent du module 15 de la figure 2 est donné sur la figure 3, dans laquelle le contacteur 2 a été remplacé par son impédance d'entrée formée de la capacité C en parallèle avec la résistance R dont la valeur dépend de l'état ouvert ou fermé du contacteur.

Le module 15 d'interface selon les figures 2 et 3 n'est cependant pas optimal, et ce, pour plusieurs raisons :

Tout d'abord, les impédances minimales et maximales spécifiées pour l'équipement externe limitent les valeurs de composants possibles pour les résistances de filtrage $R_C$ et de tirage $R_P$, et la capacité de filtrage $C_1$. En effet, en supposant à titre d'exemple non limitatif, que la tension d'alimentation $V_{CC}$ soit de 2,7 V, que le seuil bas du port d'entrée 18 du microprocesseur 17 soit de 0,5 V maximum et que le seuil haut du port d'entrée 18 soit de 2,1 V minimum, on peut montrer que les valeurs $R_C$ et $R_P$ doivent satisfaire aux deux inéquations (1) et (2) suivantes :

$$(2R_C + R_{max})/(2R_C + R_{max} + R_P) < 0,5/2,7 \text{ avec } R_{max} = 500 \ \Omega$$

(contacteur fermé) pour que l'état fermé du contacteur externe force bien un niveau logique zéro sur le port d'entrée 18 du microprocesseur, soit encore

$$R_P > 8,8 \ R_C + 2200 \text{ ou } R_C < R_P/8,8 - 250 \ \textbf{(1)}$$

$$Et \ (2R_C + R_{min})/(2R_C + R_{min} + R_P) > 2,1/2,7 \text{ avec } R_{min} = 1 \ M\Omega$$

(contacteur ouvert) pour que l'état ouvert du contacteur externe force bien un niveau logique un sur le port d'entrée 18 du microprocesseur, soit encore

$$R_p < 0.57R_C + 285 \ k\Omega \ \textbf{(2)}$$

Les deux inéquations (1) et (2) ci-dessus impliquant la relation suivante :

$$8.8 \ R_c + 2200 < R_p < 0.57R_c + 285 \ k\Omega$$

Or, il existe peu de valeurs de composants standards permettant de vérifier ces inégalités. Typiquement, pour l'exemple numérique donné, le choix des résistances est limité à la valeur 220 K$\Omega$ pour $R_P$, et à la valeur 22 K$\Omega$ pour $R_C$.
Or, les valeurs possibles pour la résistance de fitrage $R_C$ ne sont pas suffisamment élevées pour offrir une bonne tenue aux perturbations électromagnétiques.
Pour autant, les valeurs possibles pour la résistance $R_P$ sont trop élevées et ne permettent pas de réduire suffisamment le temps nécessaire à la charge de la capacité externe C de 20 nF. On peut montrer en effet que, lorsque le contacteur est ouvert ($R_{min}$ = 1 M$\Omega$), le temps nécessaire à la charge de la capacité C est de l'ordre de 11 ms pour les valeurs possibles de 220 K$\Omega$ pour $R_P$, et de 22 K$\Omega$ pour $R_C$. Ce temps important correspond à une durée pendant laquelle le microprocesseur 18 est potentiellement instable, augmentant les risques de surcomptage. En outre, durant cette période instable, une surconsommation ponctuelle importante risque d'apparaître au niveau du port d'entrée 18 du microprocesseur.
Enfin, cette période d'instabilité engendre également une surconsommation par charge externe à 0 $\Omega$. En effet, le courant instantané par entrée WM est donné par la relation :

$$I = V_{CC}/(R_P + 2R_C)$$
$$= 2.7/(220+44) = 10 \ \mu A$$

Comme les compteurs disposent en général de deux ports d'entrée dédiés à la réception d'impulsions de comptage provenant d'équipement externes, scrutes typiquement toutes les 0,5 ., le courant moyen consommé peut être calculé par la relation suivante :

$$I_{moy} = 2 \times 10 \times 11.1/500 = 0.44 \ \mu A \ \text{pour} \ R_p = 220k$$

En prenant en compte une surconsommation de $100\mu A$ induite au moment de la commutation du port d'entrée 18 du microprocesseur dans une fenêtre de 10% du temps de la phase de transition RC, le courant consommé devient :

$$I_{moy} = 0.44 + 100 \times 2 \times T/(10 \times 500) = 0.84 \ \mu A$$

La présente invention a pour but de proposer un nouveau module d'interface 15 pour l'interface entre un contacteur externe et une entrée logique du compteur, typiquement un port d'entrée du microprocesseur équipant le compteur, qui pallie les inconvénients précités.

Dans ce but, l'invention a pour objet un compteur d'énergie comportant au moins une porte logique apte à recevoir, au travers d'un module d'interface dudit compteur, des impulsions de comptage d'un équipement externe au compteur susceptibles d'être délivrées par ouverture/fermeture d'un contacteur de l'équipement externe, ladite porte logique étant associée à un seuil haut minimum et un seuil bas maximum correspondant aux seuils de comparaison pour lesquels une tension reçue sur ladite porte déclenche un niveau logique 1, respectivement un niveau logique 0, de ladite porte logique, caractérisé en ce que le module d'interface comporte un circuit de filtrage comprenant une résistance de filtrage en série avec un condensateur de filtrage agencés de sorte que la porte logique soit reliée électriquement au point de liaison entre la résistance de filtrage et le condensateur de filtrage, et reçoive un niveau de tension correspondant à la tension aux bornes du condensateur de filtrage, et en ce que le compteur comporte en outre des moyens logiciels aptes, sur un cycle de mesure, à :

- forcer ladite porte logique au niveau logique 1 pendant une première durée $T_1$ prédéfinie à l'issue de laquelle le condensateur de filtrage est complètement chargé ;

- positionner alors ladite porte logique comme une entrée recevant le niveau de tension aux bornes du condensateur de filtrage pour permettre une décharge du condensateur de filtrage;

- échantillonner, au bout d'une deuxième durée $T_2$ prédéfinie, le niveau de tension reçu sur la porte logique;

- en déduire si ladite porte logique est au niveau logique 1 ou 0 selon que le niveau de tension échantillonné est supérieur audit seuil haut minimum ou inférieur audit seuil bas maximum;

- forcer ladite porte logique au niveau logique 0 pendant une troisième durée $T_3$ prédéfinie.

Selon d'autres caractéristiques additionnelles préférées :

- la porte logique est un port d'entrée/sortie d'un microprocesseur ou microcontrôleur du compteur.

- le circuit de filtrage comprend deux résistances de filtrage de valeur identique, chaque résistance de filtrage comprenant une première borne de connexion formant une borne d'entrée du module d'interface, apte à être reliée à l'une des bornes du contacteur de l'équipement externe.

- la première durée $T_1$ et la deuxième durée $T_2$ sont prédéfinies en fonction de la valeur des résistances de filtrage, de la valeur du condensateur de filtrage et de l'impédance de charge ramenée en entrée du module d'interface par ledit équipement externe, selon que le contacteur est ouvert ou fermé, pour garantir l'obtention, à l'issue de la deuxième durée $T_2$, d'un niveau de tension échantillonné supérieur audit seuil haut minimum lorsque le contacteur est ouvert ou inférieur audit seuil bas maximum lorsque le contacteur est fermé.

- la deuxième durée $T_2$ est choisie supérieure à une durée minimum $T_{2min}$ et inférieure à une durée maximum $T_{2max}$ définies par les relations :

$$T_{2min} = - \ln (1 - V_{S-0}/V_{CC}) \times (2R_c + R_{max}) \times C_1$$

$$T_{2max} = -\ln(1 - V_{S-1}/V_{CC}) \times (2R_c + R_{min}) \times C_1$$

dans lesquelles

$V_{S-0}$ correspond audit seuil bas maximum,
$V_{S-1}$ correspond audit seuil haut minimum,
$V_{CC}$ est une tension d'alimentation,
$R_c$ est la valeur de la résistance de filtrage
$C_1$ est la valeur du condensateur de filtrage et
$R_{max}$ est la valeur de la partie résistive de ladite impédance de charge lorsque le contacteur est fermé.

- la première durée $T_1$ est choisie supérieure à une durée minimum $T_{1min}$ définie par la relation :

$$T_{1min} = -\ln(1 - V_{Cmin}/V_{CC}) \times 2R_c \times C$$

dans laquelle

$V_{Cmin}$ correspond à une valeur supérieure au seuil haut minimum,
$V_{CC}$ est une tension d'alimentation,
$R_c$ est la valeur de la résistance de filtrage
$C$ est la valeur de la partie capacitive de ladite impédance de charge.

L'invention et les avantages qu'elle procure seront mieux compris au vu de la description suivante d'un compteur muni d'un module d'interface pour une entrée WM conforme à l'invention, faite en référence aux figures annexées, dans lesquelles :

- la figure 1, déjà décrite, représente schématiquement et fonctionnellement la connexion de la sortie de comptage de deux équipements externes à des entrées d'un compteur d'énergie, au travers d'un module d'interface équipant le compteur ;
- la figure 2, déjà décrite, illustre schématiquement la constitution d'un module d'interface selon l'art antérieur ;
- la figure 3 représente le schéma électrique équivalent à la connexion d'un contacteur externe à un port d'entrée WM du microprocesseur du compteur au travers du module d'interface de la figure 2 ;
- la figure 4 illustre schématiquement la constitution d'un module d'interface selon l'invention;
- la figure 5 représente le schéma électrique équivalent à la connexion d'un contacteur externe à un port d'entrée WM du microprocesseur au travers du module d'interface de la figure 4 ;
- les figures 6 et 7 représentent des diagrammes temporels illustrant le comportement du compteur selon l'invention pendant un cycle de mesure, le contacteur externe étant respectivement ouvert et fermé.

En référence à la figure 4, on retrouve un compteur d'énergie 1 comportant au moins une porte logique, ici un port d'entrée/sortie 18 d'un microprocesseur ou d'un microcontrôleur 17 du compteur, ce port d'entrée/sortie étant apte, lorsqu'il est utilisé en tant qu'entrée, à recevoir des impulsions de comptage d'un équipement externe au compteur, susceptibles d'être délivrées par ouverture/fermeture d'un contacteur 2, de type ampoule Reed, de l'équipement externe. Dans la suite de l'exposé, on note :

- $V_{S-0}$, le seuil bas maximum du port d'entrée/sortie 18, c'est à dire la valeur maximum que la tension en entrée du port 18 doit avoir pour définir un niveau logique à 0 du port 18 ;
- $V_{S-1}$, le seuil haut minimum du port d'entrée/sortie 18, c'est à dire la valeur minimum que la tension en entrée du port 18 doit avoir pour définir un niveau logique à 1 du port 18.

Conformément à l'invention, le module 15 d'interface du compteur au travers duquel les impulsions de comptage externe vont être délivrées comporte uniquement le circuit de filtrage décrit précédemment, composé des deux résistances de filtrage $R_C$ et du condensateur de filtrage $C_1$. Chaque résistance de filtrage $R_C$ comprend une première borne de connexion formant une borne d'entrée du module 15 d'interface, apte à être reliée à l'une des bornes du contacteur 2 de l'équipement externe. Le condensateur de filtrage $C_1$ est quant à lui connectée entre le port d'entrée sortie 18 et la masse électrique du circuit, et forme par conséquent la sortie du module 15. Ainsi, le contacteur ou relais 2 est connecté en série d'une part, au port d'entrée/sortie 18 au travers d'une des résistances de filtrage $R_C$ et du condensateur de filtrage $C_1$, et d'autre part, à la masse, au travers de l'autre résistance de filtrage $R_C$. Le port d'entrée/sortie 18 reçoit ainsi le niveau de tension du module 15 d'interface au point de liaison entre la résistance de filtrage $R_C$ et le condensateur de filtrage $C_1$, ce niveau de tension correspondant à la tension aux bornes du condensateur de filtrage $C_1$.

Le schéma électrique équivalent du module 15 de la figure 4 est donné sur la figure 5, dans laquelle le contacteur 2 a été remplacé par son impédance d'entrée formée de la capacité C et de la résistance R dont la valeur dépend de l'état ouvert ou fermé du contacteur. Comme déjà indiqué ci-dessus, on considère dans la suite que l'impédance de charge ramenée par l'équipement externe présente une capacité C maximum de l'ordre de 20 nF, une résistance minimum $R_{min}$ de l'ordre de 1 MΩ lorsque le contacteur est ouvert, et une résistance maximum $R_{max}$ de l'ordre de 500 Ω lorsque le contacteur est fermé.

Un premier avantage de l'invention par rapport à la solution décrite en référence aux figures 2 et 3 réside donc dans l'économie d'une résistance de tirage $R_P$, supprimée dans le module d'interface 15 selon l'invention. Par suite, il n'est plus nécessaire d'utiliser le port de sortie 19 du compteur pour commander un quelconque mode découpé.

Le compteur comporte en outre des moyens logiciels 20, typiquement une suite d'instructions exécutées par le microprocesseur 18, aptes à gérer le comportement du port d'entrée/sortie 18 sur un cycle de mesure comme suit :

- le port d'entrée/sortie 18 est forcé au niveau logique 1 par les moyens logiciels 20 pendant une première durée $T_1$ prédéfinie. Le port 18 est ainsi positionné comme une sortie délivrant au condensateur $C_1$ un niveau de tension supérieur au seuil haut $V_{S-1}$ du port d'entrée/sortie 18; il s'en suit une charge du condensateur de filtrage $C_1$, et du condensateur C lorsque ce dernier est présent. A l'issue de la première durée $T_1$ prédéfinie, le condensateur de filtrage $C_1$ est complètement chargé.
- au bout de la première durée $T_1$, les moyens logiciels 20 positionnent le port d'entrée/sortie 18 comme une entrée recevant le niveau de tension aux bornes du condensateur de filtrage $C_1$ ; il s'en suit une décharge du condensateur de filtrage $C_1$ et du condensateur C, lorsque ce dernier est présent ;
- au bout d'une deuxième durée $T_2$ prédéfinie, les moyens logiciels 20 commandent l'échantillonnage de la tension aux bornes du condensateur de filtrage reçue sur le port d'entrée/sortie 18 ; le niveau logique du port 18 est alors déterminé à 1 ou à 0 selon que le niveau de tension échantillonné est supérieur au seuil haut minimum $V_{S-1}$ du port 18 ou inférieur au seuil bas maximum $V_{S-0}$ du port 18.
- le port d'entrée/sortie 18 est ensuite forcé au niveau logique 0 par les moyens logiciels 20 pendant une troisième durée $T_3$ prédéfinie, jusqu'au cycle suivant ; le port 18 est ainsi positionné comme une sortie délivrant au condensateur $C_1$ un niveau de tension quasi nul, permettant une décharge complète du condensateur de filtrage.

Les durées $T_1$ et $T_2$ doivent être déterminées en fonction des valeurs choisies pour les composants $R_C$ et $C_1$ et des valeurs supposées de l'impédance de charge ramenée en entrée du module 15 (typiquement des valeurs supposées pour C, $R_{min}$ et $R_{max}$), pour garantir l'obtention, à l'issue de la durée $T_2$, d'une tension suffisamment élevée au niveau du condensateur de filtrage $C_1$ lorsque le contacteur 2 est ouvert, ou d'une tension suffisamment basse au niveau du condensateur de filtrage $C_1$ lorsque le contacteur 2 est fermé. Ainsi, on garantit qu'à l'issue de la deuxième durée $T_2$, le niveau de tension échantillonné sera bien, soit supérieur au seuil haut minimum $V_{S-1}$ lorsque le contacteur 2 est ouvert, soit inférieur au seuil bas maximum $V_{S-0}$ lorsque le contacteur 2 est fermé.

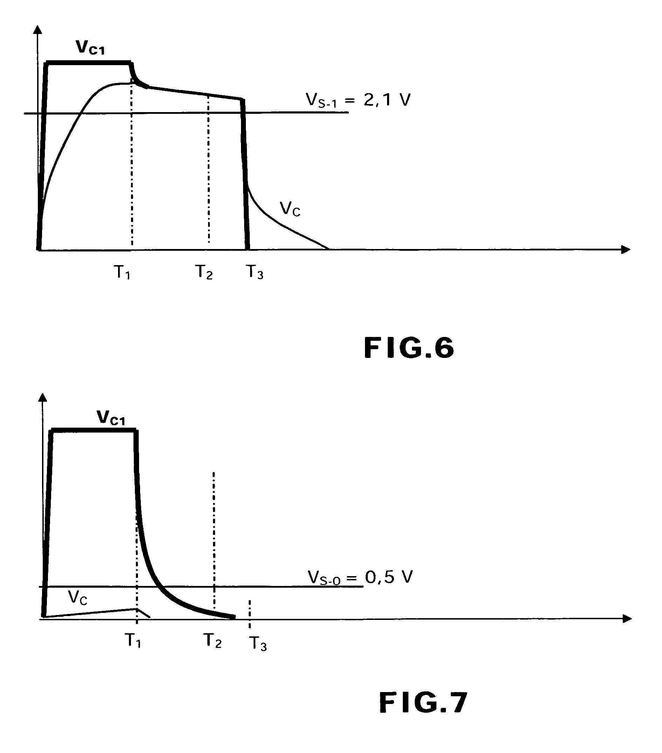

Pour mieux comprendre le fonctionnement du compteur selon l'invention, les figures 6 et 7 représentent des diagrammes temporels illustrant le comportement souhaité du compteur selon l'invention pendant un cycle de mesure lorsque le contacteur 2 est ouvert (figure 6) ou fermé (figure 7). Plus précisément, chaque courbe en trait épais sur chacune des figures illustre l'évolution temporelle, sur un cycle de mesure, de la tension $V_{C1}$ aux bornes du condensateur de filtrage $C_1$, et chaque courbe en trait plus fin illustre l'évolution temporelle correspondante de la tension $V_C$ aux bornes du condensateur externe C lorsque celui-ci est présent. Le niveau du seuil haut minimum $V_{S-1}$ du port 18 a été reporté sur la figure 6, et le niveau du seuil bas maximum $V_{S-0}$ a été reporté sur la figure 7. On rappelle que, lorsque le contacteur 2 est ouvert, le niveau logique vu sur le port d'entrée 18 du microprocesseur devrait être à 1, ce qui nécessite d'avoir une tension échantillonnée aux bornes du condensateur $C_1$, à l'issue de la deuxième durée $T_2$, supérieure au seuil haut minimum $V_{S-1}$, comme cela est illustré sur la figure 6. En revanche, lorsque le contacteur 2 est fermé, le niveau logique vu sur le port d'entrée 18 du microprocesseur devrait être à 0, ce qui nécessite d'avoir, à l'issue de la deuxième durée $T_2$, une tension échantillonnée aux bornes du condensateur $C_1$ inférieure au seuil bas maximum $V_{S-0}$.

Durant la première durée $T_1$ lors de laquelle le port d'entrée/sortie 18 est forcé au niveau logique 1, le condensateur de filtrage $C_1$ va se charger quasiment instantanément, que le contacteur 2 soit ouvert ou fermé. En revanche, la charge du condensateur externe C doit différer selon que le contacteur est ouvert ou fermé, et c'est cette contrainte qui va permettre de fixer la durée $T_1$. Plus précisément, lorsque le contacteur est ouvert (figure 6), le condensateur externe C de 20 nF doit avoir eu le temps de se charger suffisamment pendant la première durée $T_1$ pour atteindre une valeur supérieure au seuil haut minimum $V_{S-1}$, et garantir ainsi que la tension $V_{C1}$ aux bornes du condensateur de filtrage

$C_1$ soit toujours à une valeur supérieure au seuil haut minimum $V_{S-1}$ à la fin de la deuxième durée $T_2$. De manière différente, si le contacteur est fermé (figure 7), la charge stockée dans le condensateur externe C est très faible à l'issue de la première durée $T_1$, du fait du rapport $R_{max}/2R_C$ des résistances, la résistance externe $R_{max}$ étant égale ici à 500 $\Omega$.

La deuxième durée $T_2$ doit quant à elle être choisie de manière à permettre d'une part, une décharge suffisamment lente du condensateur de filtrage $C_1$ pour que la tension $V_{C1}$ aux bornes du condensateur de filtrage $C_1$ soit à une valeur supérieure au seuil haut minimum $V_{S-1}$ à la fin de la deuxième durée $T_2$, lorsque le contacteur 2 est ouvert (figure 6), et d'autre part, une décharge suffisamment rapide de ce même condensateur de filtrage $C_1$ pour que la tension $V_{C1}$ aux bornes du condensateur de filtrage $C_1$ soit à une valeur inférieure au seuil bas maximum $V_{S-0}$ à la fin de la deuxième durée $T_2$, lorsque le contacteur 2 est fermé (figure 7).

Le module 15 d'interface selon l'invention et le contrôle particulier par les moyens logiciels 20 du compteur permettent de pallier les différents inconvénients du module des figures 2 et 3 mentionnés précédemment, comme cela va être à présent expliqué.

Pour pouvoir faire une comparaison des performances du module d'interface selon l'invention par rapport à celles du module d'interface des figues 2 et 3, on rappelle ci-après les valeurs prises à titre d'exemple non limitatif, à savoir :

- tension d'alimentation : $V_{CC}$ = 2,7 V,
- Seuil bas maximum du port d'entrée/sortie 18 : $V_{S-0}$ = 0,5 V,
- Seuil haut minimum du port d'entrée/sortie 18 : $V_{S-1}$ = 2,1 V,

Tout d'abord, il est possible de choisir, parmi les composants standards du commerce, des valeurs pour la résistance de filtrage $R_C$ et la capacité de filtrage $C_1$, qui améliorent les performances du compteur, contrairement à la solution de l'art antérieur qui limitait les valeurs de composants possibles. Ainsi, en prenant le même exemple numérique non limitatif que précédemment, à savoir une tension d'alimentation $V_{CC}$ de 2,7 V, un seuil bas du port d'entrée 18 du microprocesseur 17 de 0,5 V maximum, un seuil haut du port d'entrée 18 de 2,1 V minimum, et une valeur de la capacité de filtrage $C_1$ sensiblement égale à 2,2 nF, on peut montrer que la valeur $R_C$ doit satisfaire à l'inéquation (3) suivante :

$R/(2Rc + R_{min}) > 2,1/2,7$ avec $R_{min}$ = 1 M$\Omega$ (contacteur ouvert) pour que l'état ouvert du contacteur externe force bien un niveau logique à 1 sur le port d'entrée 18 du microprocesseur, soit encore :

$$R_C < 142 \text{ k}\Omega \textbf{ (3)}$$

On peut choisir ainsi, dans les composants classiques connus, une valeur pour $R_C$ égale à 47 K$\Omega$, c'est-à-dire deux fois plus importante que celle qu'il était possible de choisir pour le module des figures 2 et 3. Il en résulte un gain significatif (facteur 2) en ce qui concerne la tenue de la fonctionnalité de comptage sur impulsions externes face aux perturbations électromagnétiques.

En revanche, lorsque l'entrée logique du microprocesseur doit être au zéro logique, ce qui correspond à une valeur de 500 $\Omega$ maximum pour la résistance externe $R_{max}$ (contacteur fermé), le condensateur C de 20 nF se décharge rapidement, et la valeur du condensateur $C_1$ doit être choisie pour permettre sa décharge rapide pendant la deuxième durée $T_2$. Dans la suite, on choisit une valeur de 2,2 nF+/- 20% pour le condensateur de filtrage.

Par ailleurs, la durée pendant laquelle le port d'entrée/sortie 18 du microprocesseur est instable est considérablement réduite par rapport à la solution de l'art antérieur. En effet, on rappelle qu'une première contrainte pour la deuxième durée $T_2$ est de permettre une décharge suffisamment rapide du condensateur de filtrage $C_1$ pour que la tension $V_{C1}$ aux bornes du condensateur de filtrage $C_1$ soit à une valeur inférieure au seuil bas maximum $V_{S-0}$ à la fin de la deuxième durée $T_2$, lorsque le contacteur 2 est fermé. En outre, une deuxième contrainte pour la deuxième durée $T_2$ est de permettre également une décharge suffisamment lente du condensateur de filtrage $C_1$ pour que la tension $V_{C1}$ aux bornes du condensateur de filtrage C1 soit à une valeur supérieure au seuil haut minimum $V_{S-1}$ à la fin de la deuxième durée $T_2$, lorsque le contacteur 2 est ouvert.

Or :

$V_C = V_{CC} (1 - \exp(-T/\sigma_1))$ avec $\sigma_1$ constante de temps du circuit

$$\sigma_1 = (2R_c + R) \times C_1.$$

donc :

$$T/\sigma_1 = - \ln (1- V_C/ V_{CC})$$

On peut ainsi montrer que la première contrainte ci-dessus impose une durée minimum $T_{2min}$ définie par :

$$T_{2min}/\sigma_1 = - \ln (1- V_{S-0}/ V_{CC})$$

Soit

$$T_{2min} = - \ln (1- V_{S-0}/ V_{CC}) \times (2R_c + R_{max}) \times C_1$$

$$T_{2min} = -\ln (1-0,5/2,7) \times (2 \times 47\Omega + 500 \ \Omega) \times 2,2 \times 1,2 \ nF = 421 \ \mu s$$

Et que la deuxième contrainte ci-dessus impose une durée maximum $T_{2max}$ définie par :

$$T_{2max}/\sigma_1 = - \ln (1- V_{S-1}/ V_{CC})$$

Soit

$$T_{2max} = - \ln (1- V_{S-1}/ V_{CC}) \times (2R_c + R_{min}) \times C_1$$

$$T_{2max} = -\ln (1-2,1/2,7) \times (2 \times 47\Omega + 1000 \ \Omega) \times 2,2 \times 0,8 \ nF = 483 \ \mu s$$

La deuxième durée $T_2$, de l'ordre de 0,5 ms, est à mettre en regard de la durée de 11ms mentionnée précédemment dans le cas du module selon l'art antérieur. Ainsi, on réduit considérablement (facteur 20) grâce à l'invention, la durée d'instabilité du port d'entrée du microprocesseur.

S'agissant de la première durée $T_1$ lors de laquelle le port d'entrée/sortie 18 est forcé au niveau logique 1, on rappelle que celle-ci doit être choisie suffisamment longue pour que, lorsque le contacteur est ouvert (figure 6), le condensateur externe C de 20 nF ait eu le temps de se charger suffisamment, et que par suite, la tension $V_{C1}$ aux bornes du condensateur de filtrage $C_1$ soit toujours à une valeur supérieure au seuil haut minimum $V_{S-1}$ à la fin de la deuxième durée $T_2$. Dans l'exemple numérique, on considère qu'il faut avoir une tension minimum $V_{Cmin}$ de 2,15 V aux bornes du condensateur externe C à la fin de la durée $T_1$ pour garantir un niveau logique de 1 sur le port d'entrée 18. Or:

$V_C = V_{CC} (1 - \exp(-T/\sigma_1))$ avec $\sigma_1$ constante de temps du circuit $\sigma_1 = 2R_C \times C$, car la capacité $C_1$ et la résistance externe, ici à 1 MΩ, peuvent être négligées.

donc :

$$T/\sigma_1 = - \ln (1- V_C/ V_{CC})$$

Soit

$$T = - \ln (1- V_C/ V_{CC}) \times 2R_c \times C$$

Grâce aux relations précédentes, on peut déduire que la tension $V_C$ sera égale à 2,15 V au bout d'une première durée minimale $T_{1min}$ égale à :

$$T_{1min} = -\ln(1 - V_{Cmin}/V_{CC}) \times 2R_c \times C$$

Soit

$$T_{1min} = 1,6 \times (2 \times 47\,\Omega) \times 20\,nF = 3\,ms$$

On choisira par exemple une valeur de 3,6 ms pour la première durée $T_1$ représentative de la durée laquelle le port 18 du microprocesseur est forcé à 1, c'est-à-dire relié au potentiel de 2,7 V.

Dans le cadre du montage selon l'invention, le courant consommé est donné par la relation

$$I = V_{CC}/2R_C$$

Avec les valeurs numériques précédentes données à titre d'exemple, on obtient ainsi un courant minimum

$$I_{min} = 2,7/(2 \times 2,47) = 28,7\,\mu A$$

et un courant moyen consommé

$$I_{moy} = 2 \times 28,7 \times 3,6/100 = 0,41\,\mu A$$

Ainsi, le courant moyen consommé est équivalent à celui du montage connu.

En revanche, si l'on prend en compte, comme précédemment, une surconsommation de 100 $\mu A$ induite au moment de la commutation du port 18 dans une fenêtre de 10% du temps de la phase de transition RC (surconsommation de croisement), le courant consommé dans la présente invention devient

$$I_{moy} = 0,4 + (100 \times 2 \times T_1)/(10 \times 500) = 0,55\,\mu A$$

On améliore ainsi le bilan consommation par rapport à la solution connue.

Le tableau suivant résume les gains en performance obtenus selon l'invention par rapport à la solution de la figure 2 :

|  | Montage Art antérieur | Montage invention | Gain |
|---|---|---|---|
| Durée instabilité $\mu P$ en entrée | 11 ms | 0.5 ms | Durée instabilité considérablement réduite (Facteur 20) |
| Valeur $R_C$ | 22 k$\Omega$ | 47k$\Omega$ | Meilleure tenue face aux perturbations électromagnétique (Facteur 2) |
| Impact consommation | 0.44 $\mu A$ | 0.41 $\mu A$ | Equivalent |
| Impact consommation tenant compte d'une surconsommation de croisement | 0.84 $\mu A$ | 0.55 $\mu A$ | Amélioration bilan consommation |

Grace à l'invention, on obtient une solution robuste, peu gourmande en énergie, satisfaisant aux contraintes techniques imposées, et présentant une meilleure tenue aux perturbations électromagnétiques. Il en résulte une réduction des risques de mauvais comptage, grâce à une durée d'instabilité réduite, et l'utilisation d'une impédance d'entrée suffisamment importante.

**Revendications**

1. Compteur (1) d'énergie comportant au moins une porte logique (18) apte à recevoir, au travers d'un module (15) d'interface dudit compteur, des impulsions de comptage d'un équipement externe au compteur susceptibles d'être délivrées par ouverture/fermeture d'un contacteur (2) de l'équipement externe, ladite porte logique (18) étant associée à un seuil haut minimum ($V_{S-1}$) et un seuil bas maximum ($V_{S-0}$) correspondant aux seuils de comparaison pour lesquels une tension reçue sur ladite porte (18) déclenche un niveau logique 1, respectivement un niveau logique 0, de ladite porte logique (18), **caractérisé en ce que** le module (15) d'interface comporte un circuit de filtrage comprenant une résistance de filtrage ($R_C$) en série avec un condensateur de filtrage ($C_1$) agencés de sorte que la porte logique (18) soit reliée électriquement au point de liaison entre la résistance de filtrage ($R_C$) et le condensateur de filtrage ($C_1$), et reçoive un niveau de tension correspondant à la tension aux bornes du condensateur de filtrage ($C_1$), et **en ce que** le compteur (1) comporte en outre des moyens logiciels (20) adaptés, sur un cycle de mesure, à :

   - forcer ladite porte logique (18) au niveau logique 1 pendant une première durée $T_1$ prédéfinie à l'issue de laquelle le condensateur de filtrage ($C_1$) est complètement chargé ;
   - positionner alors ladite porte logique (18) comme une entrée recevant le niveau de tension aux bornes du condensateur de filtrage ($C_1$) pour permettre une décharge du condensateur de filtrage ($C_1$);
   - échantillonner, au bout d'une deuxième durée $T_2$ prédéfinie, le niveau de tension reçu sur la porte logique (18);
   - en déduire si ladite porte logique (18) est au niveau logique 1 ou 0 selon que le niveau de tension échantillonné est supérieur audit seuil haut minimum ($V_{S-1}$) ou inférieur audit seuil bas maximum ($V_{S-0}$) ;
   - forcer ladite porte logique (18) au niveau logique 0 pendant une troisième durée $T_3$ prédéfinie.

2. Compteur (1) d'énergie selon la revendication 1, **caractérisé en ce que** ladite porte logique (18) est un port d'entrée/sortie d'un microprocesseur ou microcontrôleur (17) du compteur (1).

3. Compteur d'énergie selon l'une quelconque des revendications précédentes, **caractérisé en ce que** ledit circuit de filtrage comprend deux résistances de filtrage ($R_C$) de valeur identique, chaque résistance de filtrage ($R_C$) comprenant une première borne de connexion formant une borne d'entrée du module (15) d'interface, apte à être reliée à l'une des bornes du contacteur (2) de l'équipement externe.

4. Compteur d'énergie selon la revendication 3, **caractérisé en ce que** la première durée $T_1$ et la deuxième durée $T_2$ sont prédéfinies en fonction de la valeur des résistances de filtrage ($R_C$), de la valeur du condensateur de filtrage ($C_1$) et de l'impédance de charge ramenée en entrée du module (15) d'interface par ledit équipement externe, selon que le contacteur (2) est ouvert ou fermé, pour garantir l'obtention, à l'issue de la deuxième durée $T_2$, d'un niveau de tension échantillonné supérieur audit seuil haut minimum ($V_{S-1}$) lorsque le contacteur (2) est ouvert ou inférieur audit seuil bas maximum ($V_{S-0}$) lorsque le contacteur (2) est fermé.

5. Compteur d'énergie selon la revendication 4, **caractérisé en ce que** la deuxième durée $T_2$ est choisie supérieure à une durée minimum $T_{2min}$ et inférieure à une durée maximum $T_{2max}$ définies par les relations

$$T_{2min} = - \ln (1 - V_{S-0} / V_{CC}) \times (2R_c + R_{max}) \times C_1$$

$$T_{2max} = - \ln (1 - V_{S-1} / V_{CC}) \times (2R_c + R_{min}) \times C_1$$

dans lesquelles
$V_{S-0}$ correspond audit seuil bas maximum,
$V_{S-1}$ correspond audit seuil haut minimum,
Vcc est une tension d'alimentation,
$R_C$ est la valeur de la résistance de filtrage
$C_1$ est la valeur du condensateur de filtrage et
$R_{max}$ est la valeur de la partie résistive de ladite impédance de charge lorsque le contacteur (2) est fermé.

6. Compteur d'énergie selon l'une quelconque des revendications 3 à 5, **caractérisé en ce que** la première durée $T_1$ est choisie supérieure à une durée minimum $T_{1min}$ définie par la relation

$$T_{1min} = -\ln(1- V_{Cmin}/ V_{CC}) \times 2R_c \times C$$

dans laquelle

$V_{Cmin}$ correspond à une valeur supérieure au seuil haut minimum,

$V_{CC}$ est une tension d'alimentation,

$R_C$ est la valeur de la résistance de filtrage

C est la valeur de la partie capacitive de ladite impédance de charge.

## Patentansprüche

1. Energiezähler (1), umfassend zumindest ein logisches Gatter (18), das geeignet ist, über ein Schnittstellenmodul (15) des Zählers Zählimpulse von einer zum Zähler externen Ausrüstung zu empfangen, die durch Öffnen/Schließen eines Kontaktelements (2) der externen Ausrüstung geliefert werden können, wobei das logische Gatter (18) mit einer oberen Mindestschwelle ($V_{S-1}$) und einer unteren Höchstschwelle ($V_{S-0}$) verbunden ist, die den Vergleichsschwellen entsprechen, bei denen eine am Gatter (18) empfangene Spannung ein logisches Niveau 1 bzw. ein logisches Niveau 0 des logischen Gatters (18) auslöst, **dadurch gekennzeichnet, dass** das Schnittstellenmodul (15) eine Filterschaltung aufweist, umfassend einen Filterwiderstand ($R_C$) in Serie mit einem Filterkondensator ($C_1$), die derart angeordnet sind, dass das logische Gatter (18) elektrisch mit dem Verbindungspunkt zwischen dem Filterwiderstand ($R_C$) und dem Filterkondensator ($C_1$) verbunden ist und ein Spannungsniveau entsprechend der Spannung an den Klemmen des Filterkondensators ($C_1$) empfängt, und dass der Zähler (1) ferner Softwaremittel (20) umfasst, die eingerichtet sind, über einen Messzyklus:

   - das logische Gatter (18) während einer ersten vordefinierten Zeitdauer $T_1$ auf das logische Niveau 1 zu bringen, nach welcher Zeitdauer $T_1$ der Filterkondensator ($C_1$) vollständig geladen ist;
   - nun das logische Gatter (18) als einen Eingang zu positionieren, der das Spannungsniveau an den Klemmen des Filterkondensators ($C_1$) empfängt, um ein Entladen des Filterkondensators ($C_1$) zu ermöglichen;
   - nach einer zweiten vordefinierten Zeitdauer $T_2$ das am logischen Gatter (18) empfangene Spannungsniveau abzutasten;
   - davon abzuleiten, ob das logische Gatter (18) auf dem logischen Niveau 1 oder 0 ist, je nachdem, ob das abgetastete Spannungsniveau größer als die obere Mindestschwelle ($V_{S-1}$) oder kleiner als die untere Höchstschwelle ($V_{S-0}$) ist;
   - das logische Gatter (18) während einer dritten vordefinierten Zeitdauer $T_3$ auf das logische Niveau 0 zu bringen.

2. Energiezähler (1) nach Anspruch 1, **dadurch gekennzeichnet, dass** das logische Gatter (18) ein Eingangs-/Ausgangsanschluss eines Mikroprozessors oder Mikrocontrollers (17) des Zählers (1) ist.

3. Energiezähler nach einem der vorhergehenden Ansprüche, **dadurch gekennzeichnet, dass** die Filterschaltung zwei Filterwiderstände ($R_C$) mit identischem Wert umfasst, wobei jeder Filterwiderstand ($R_C$) eine erste Anschlussklemme umfasst, die eine Eingangsklemme des Schnittstellenmoduls (15) bildet, die geeignet ist, mit einer der Klemmen des Kontaktelements (2) der externen Ausrüstung verbunden zu werden.

4. Energiezähler nach Anspruch 3, **dadurch gekennzeichnet, dass** die erste Zeitdauer $T_1$ und die zweite Zeitdauer $T_2$ in Abhängigkeit vom Wert der Filterwiderstände ($R_C$), vom Wert des Filterkondensators ($C_1$) und von der durch die externe Ausrüstung zurückgeführten Ladeimpedanz am Eingang des Schnittstellenmoduls (15), je nachdem, ob das Kontaktelement (2) offen oder geschlossen ist, vordefiniert sind, um nach Ablauf der zweiten Zeitdauer $T_2$ den Erhalt eines abgetasteten Spannungsniveaus, das größer als die obere Mindestschwelle ($V_{S-1}$) ist, wenn das Kontaktelement (2) offen ist, oder das kleiner als die untere Höchstschwelle ($V_{S-0}$) ist, wenn das Kontaktelement (2) geschlossen ist, zu gewährleisten.

5. Energiezähler nach Anspruch 4, **dadurch gekennzeichnet, dass** die zweite Zeitdauer $T_2$ größer als eine Mindestzeitdauer $T_{2min}$ und kleiner als eine Höchstzeitdauer $T_{2max}$, gewählt ist, die durch folgende Verhältnisse definiert sind:

$$T_{2min} = -\ln(1-V_{S-0}/V_{CC}) \times (2R_c + R_{max}) \times C_1$$

$$T_{2max} = - \ln(1-V_{S-1}/V_{CC}) \times (2R_c + R_{min}) \times C_1$$

wobei

$V_{S-0}$ der unteren Höchstschwelle entspricht,
$V_{S-1}$ der oberen Mindestschwelle entspricht,
$V_{CC}$ eine Versorgungsspannung ist,
$R_C$ der Wert des Filterwiderstandes ist,
$C_1$ der Wert des Filterkondensators ist und
$R_{max}$ der Wert des ohmschen Anteils der Ladeimpedanz ist, wenn das Kontaktelement (2) geschlossen ist.

6. Energiezähler nach einem der Ansprüche 3 bis 5, **dadurch gekennzeichnet, dass** die erste Zeitdauer $T_1$ größer als eine Mindestzeitdauer $T_{1min}$ gewählt ist, die durch folgendes Verhältnis definiert ist:

$$T_{1min} = - \ln(1-V_{Cmin}/V_{CC}) \times 2R_c \times C$$

wobei

$V_{Cmin}$ einem Wert größer als die obere Mindestschwelle entspricht,
$V_{CC}$ eine Versorgungsspannung ist,
$R_c$ der Wert des Filterwiderstandes ist,
C der Wert des kapazitiven Anteils der Ladeimpedanz ist.

**Claims**

1. Power meter (1) including at least one logic gate (18) capable of receiving, via an interface module (15) of the said meter, counting pulses from external equipment of the meter which are capable of being delivered by opening/closing of a contactor (2) of the external equipment, the said logi gate (18) being associated with a minimum high threshold ($V_{S-1}$) and a maximum low threshold ($V_{S-0}$) corresponding to the comparison thresholds for which a voltage received on the said gate (18) triggers a logic level 1, or respectively a logic level 0, of the said logic gate (18), **characterised in that** the interface module (15) includes a filter circuit comprising a filter resistor ($R_C$) in series with a filter capacitor ($C_1$) arranged so that the logic gate (18) is connected electrically to the connection point between the filter resistor ($R_C$) and the filter capacitor ($C_1$), and receives a voltage level corresponding to the voltage at the terminals of the filter capacitor ($C_1$), and **in that** the meter (1) also includes software means (20) adapted, over a measurement cycle, in order:

   - to force the said logic gate (18) to the logic level 1 during a first predefined period $T_1$ at the end of which the filter capacitor ($C_1$) is completely charged;
   - then to position the said logic gate (18) as an input receiving the voltage level at the terminals of the filter capacitor ($C_1$) in order to enable a discharge of the filter capacitor ($C_1$);
   - to sample, at the end of a predefined second period $T_2$, the voltage level received on the logic gate (18);
   - to deduce therefrom whether the said logic gate (18) is at the logic level 1 or 0 depending upon whether the sampled voltage level is higher than the said minimum high threshold ($V_{S-1}$) or lower than the said maximum low threshold ($V_{S-1}$);
   - to force the said logic gate (18) to the logic level 0 during a third predefined period $T_3$.

2. Power meter (1) as claimed in claim 1, **characterised in that** the said logic gate (18) is an input/output port of a microprocessor or microcontroller (17) of the meter (1).

3. Power meter as claimed in any one of the preceding claims, **characterised in that** the said filter circuit comprises two filter resistors ($R_C$) of identical value, each filter resistor ($R_C$) comprising a first connection terminal forming an input terminal of the interface module (15), capable of being connected to one of the terminals of the contactor (2) of the external equipment.

4. Power meter as claimed in claim 3, **characterised in that** the first duration $T_1$ and the second duration $T_2$ are

predefined as a function of the value of the filter resistors ($R_C$), of the value of the filter capacitor ($C_1$) and of the load impedance brought to the input of the interface module (15) by the said external equipment, depending upon whether the contactor (2) is open or closed, in order to ensure that at the end of the second period $T_2$ a sampled voltage level is obtained which is higher than the said minimum high threshold ($V_{S-1}$) when the contactor (2) is open or lower than the said maximum low threshold ($V_{S-1}$) when the contactor (2) is closed.

5.  Power meter as claimed in claim 4, **characterised in that** the second period $T_2$ is chosen to be greater than a minimum period $T_{2min}$ and less than a maximum period $T_{2max}$ defined by the relationships

$$T_{2min} = - \ln (1 - V_{S-0}/ V_{CC}) \times (2R_c + R_{max}) \times C_1$$

$$T_{2max} = - \ln (1 - V_{S-1}/ V_{CC}) \times (2R_c + R_{min}) \times C_1$$

in which:

$V_{S-0}$ corresponds to the said maximum low threshold,
$V_{S-1}$ corresponds to the said minimum high threshold,
$V_{CC}$ is a supply voltage,
$R_c$ is the value of the filter resistor
$C_1$ is the value of the filter capacitor and
$R_{max}$ is the value of the resistive part of the said load impedance when the contactor (2) is closed.

6.  Power meter as claimed in any one of claims 3 to 5, **characterised in that** the first period $T_1$ is chosen to be greater than a minimum period $T_{1min}$ defined by the relationship

$$T_{1min} = - \ln (1 - V_{Cmin}/ V_{CC}) \times 2R_c \times C$$

wherein
$Vc_{min}$, corresponds to a value greater than the minimum high threshold,
$V_{CC}$ is a supply voltage,
$R_c$ is the value of the filter resistor
$C$ is the value of the capacitive part of the the said load impedance.

**FIG.1**

**FIG.2**

**FIG.3**

**FIG.4**

**FIG.5**

**FIG.6**

**FIG.7**